# EUROPEAN PATENT SPECIFICATION

(11) **EP 3 330 570 B1**
(45) Date of publication and mention of the grant of the patent: **25.09.2019**
(21) Application number: 16201909.5
(22) Date of filing: 02.12.2016
(51) Int. Cl.: F16H 25/20, B64C 13/28, B64C 13/42, F16H 25/22

(54) **CONTROL SYSTEM FOR AN ACTUATOR**
STEUERSYSTEM FÜR EIN STELLGLIED
SYSTÈME DE COMMANDE POUR UN ACTIONNEUR

(43) Date of publication of application: 06.06.2018
(73) Proprietor: Microtecnica S.r.l., 10126 Turin (IT)
(72) Inventor: GIANFRANCESCHI, Marco, 10126 Torino (IT)
(74) Representative: Dehns

(56) References cited:
- EP-A1- 1 865 590
- FR-A- 1 548 718
- US-A- 3 269 676

## Description

### FIELD

The present disclosure relates generally to a control system for an actuator and methods of operating an actuator, and in particular an actuator that is capable to continue operation after a mechanical jam and drive failure.

### BACKGROUND

Actuator systems are typically designed to operate even after failure of one or more of the systems. For example, and especially in the case of flight control actuators and flight critical applications, redundancies must be built in to account for failures in the drive systems and electro-mechanical or hydraulic controls. For example, if one of the electrical control paths is damaged, one or more backup paths may remain operational so that the actuation signal can still be transmitted through to the actuator.

Redundancy to let an actuator operate after a mechanical jam has been found to be particularly important when using electro-mechanical actuators, for example to comply with reliability requirements in flight critical applications.

It is desired to provide an improved control system for an actuator.

EP 1 865 590 A1 discloses an actuator as set forth in the preamble of claim 1.

FR 1 548 718 A discloses an actuating system.

US 3 269 676 A discloses a valve actuator apparatus.

### SUMMARY

In accordance with an aspect of the present invention there is provided an actuator as recited in claim 1.

The broadest aspects of the present disclosure relate to the use of one or more bearing arrangements as described above, which permit movement of the connecting member (and therefore the output shaft) in the event of a failure (e.g., mechanical failure), disengagement, shutdown or other stoppage of one of the drive systems configured to move the output shaft. Various embodiments are directed to the features of the bearing arrangement(s), which features should be considered to be optional, and not essential to the broadest aspects of the disclosure.

Failure, disengagement, shutdown or other stoppage of the first or second drive system as described herein may refer to a state in which the first movable component or second movable component, respectively, can no longer substantially move or is unable to move at all. For example, the respective first movable component or second movable component may be partly or completely jammed or otherwise unable to move as it would under normal conditions. In the case of disengagement of the first or second drive system, this may refer to a disengagement of any part of the system that prevents the respective first movable component or second movable component from moving.

A first of the one or more bearing arrangements may be associated with the first movable component, and a second of the one or more bearing arrangements may be associated with the second movable component.

The first bearing arrangement may permit rotational movement of the connecting member with respect to the first movable component. Additionally, or alternatively the first bearing arrangement may permit sliding movement of the connecting member towards and away from the first movable component.

The second bearing arrangement may permit rotational movement of the connecting member with respect to the second movable component. Additionally, or alternatively the second bearing arrangement may permit sliding movement of the connecting member towards and away from the second movable component.

The one or more bearing arrangements may each comprise a rotational bearing to allow the connecting member to rotate relative to the first movable component and/or the second movable component.

The rotational bearing(s) may each comprise an outer, cylindrical surface of a flange connected to (or forming part of) the first movable component or the second movable component, wherein the outer, cylindrical surface is a bearing surface.

The one or more bearing arrangements may each comprise a sliding bearing to allow the connecting member to slide towards or away from the first movable component and/or the second movable component. The sliding bearing may comprise an intermediate component that is slidably received within a pocket of the connecting member.

The outer, cylindrical surface of the flange connected to (or forming part of) the first movable component or the second movable component may be in sliding engagement with a cylindrical surface of the intermediate component.

The connecting member may be connected to the output shaft via a central, rotational bearing. The central, rotational bearing may comprise an outer, cylindrical surface of a flange connected to (or forming part of) the output shaft, and a mating, cylindrical surface of the connecting member. The flange connected to (or forming part of) the output shaft may extend into an aperture of the connecting member. The mating, cylindrical surface of the connecting member may form an inner surface of the aperture.

The connecting member may be connected to the output shaft (e.g., via the central, rotational bearing) at a mid-point along its length.

The first movable component may move along a first axis, for example a longitudinal axis of the first drive system, which may be a rotational axis if the first movable component is a nut.

The second movable component may move along a second axis, for example a longitudinal axis of the second drive system, which may be a rotational axis if the second movable component is a nut.

The first axis may be parallel with the second axis, and each of the first and second axes may be parallel with the longitudinal axis of the output shaft.

The connecting member may extend between the first movable component and the second movable component (and e.g., the first axis and the second axis). The connecting member may be rigid (e.g., may not be deformable during normal operation, such as at atmospheric temperature and pressure).

During a first mode of operation (e.g., normal operation) the first movable component and the second movable component may move by the same distance along their respective axis. The connecting member may also move by the same distance as the first movable component and the second movable component. In other words, the first movable component, the second movable component and the connecting member may move with each other and by the same distance, during this mode of operation. The distance moved by the first movable component, the second movable component and the connecting member in the first mode of operation may be the same as the distance moved by the output shaft.

During a second mode of operation (e.g., upon failure, disengagement, shutdown or other stoppage of the first or second drive system, one of the first or second movable components will be unable to move as it would under normal conditions (e.g., partly or completely jammed). In this mode of operation, the other of the first or second movable components will still be able to move the connecting member (and therefore the output shaft) even though it may be substantially fixed in position at its connection to the jammed movable component. This is achieved through the use of one or more bearing arrangements configured to permit movement of the connecting member by the first movable component or the second movable component upon failure, disengagement, shutdown or other stoppage of the second drive system or the first drive system, respectively.

The output shaft may be operatively connected to a flight control surface of an aircraft, or to a helicopter main or tail rotor.

In accordance with an aspect of the present invention there is provided a method of operating an actuator as described above, comprising driving the output shaft in the event of a mechanical failure of one of the first movable component and the second movable component using the other of the first movable component or the second movable component.

In accordance with an aspect of the present invention there is provided a bearing arrangement for an actuator, wherein the bearing arrangement may be configured to permit rotational and sliding movement of a first member with respect to a second member.

The bearing arrangement may comprise a rotational bearing to allow the first member to rotate relative to the second member. The rotational bearing(s) may each comprise an outer, cylindrical surface of a flange connected to (or forming part of) the second member.

The one or more bearing arrangements may each comprise a sliding bearing to allow the first member to slide towards or away from the second member. The sliding bearing may comprise an intermediate component that is slidably received within a pocket of the first member.

The outer, cylindrical surface of the flange connected to (or forming part of) the second member may be in sliding engagement with a cylindrical surface of the intermediate component.

The first member may be connected to and configured to move an output shaft of the actuator.

### BRIEF DESCRIPTION OF THE DRAWINGS

Various embodiments will now be described, by way of example only, and with reference to the accompanying drawing in which:

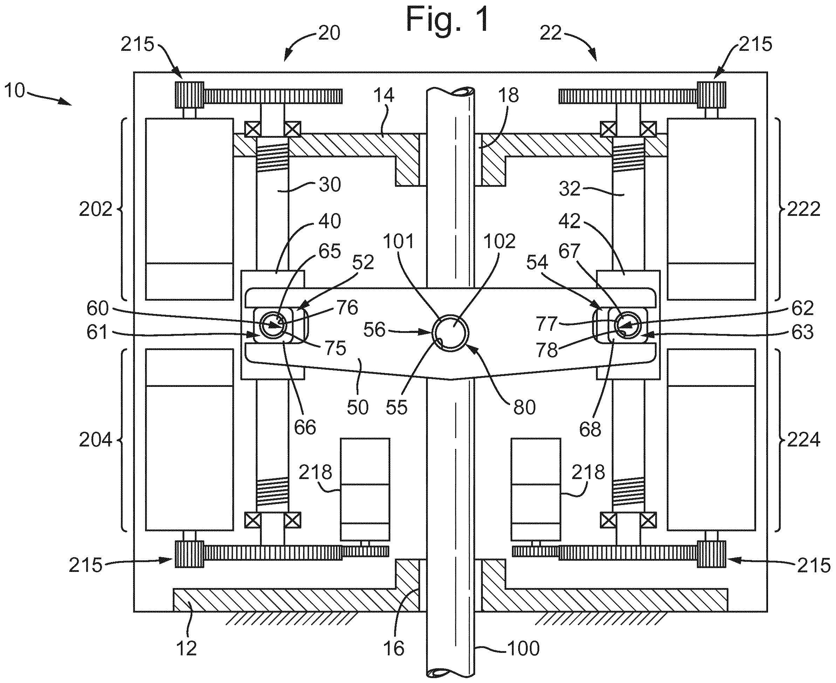

Fig. 1 shows an actuator in accordance with one embodiment of the present disclosure.

### DETAILED DESCRIPTION

An actuator 10 in accordance with one embodiment of the present disclosure is shown in Fig. 1. The actuator 10 comprises an output shaft 100 for actuating a component, for example an aircraft flight control surface or helicopter main/tail rotor (not shown).

The actuator 10 comprises a forward mounting structure 12 and an aft mounting structure 14, both of which support the output shaft 100. A forward bearing 16 may be provided to support the output shaft 100 at the forward mounting structure 12, and an aft bearing 18 may be provided to support the output shaft 100 at the aft mounting structure 14.

The actuator 10 comprises a control system configured to move the output shaft 100, and comprising first and second drive systems 20, 22, which are provided to control the movement of the output shaft 100. The first and second drive systems 20, 22 may be located symmetrically on opposed sides of the output shaft 100, and may be independent of each other, such that the first drive system 20 is able to operate upon failure of the second drive system 22, and vice-versa.

The first drive system 20 may comprise a first screw shaft 30 and a first nut 40 translatable along the first screw shaft 30. In other words, as the first screw shaft 30 rotates about its longitudinal axis, the first nut 40 moves axially along the first screw shaft 30. The second drive system 22 may comprise a second screw shaft 32 and a second nut 42 translatable along the second screw shaft 32. In other words, as the second screw shaft 32 rotates about its longitudinal axis, the second nut 42 moves axially along the second screw shaft 32.

The first nut 40 may be a first movable component of the first drive system 20, and the second nut 42 may be a second movable component of the second drive system 22.

Both the first nut 40 and the second nut 42 are connected to the output shaft 100, and each other, by a connecting member 50, which forms part of the control system and moves with the first and second nuts 40, 42 to cause the output shaft 100 to move and actuate a component to which it may be attached.

The first nut 40 is attached to the connecting member 50 via a first bearing arrangement that includes a rotational bearing 60 and a sliding bearing 61. The rotational bearing 60 and the sliding bearing 61 allow the connecting member 50 to move (e.g., towards or away from, and rotate) relative to the first nut 40.

The rotational bearing 60 comprises the outer, cylindrical surface 75 of a flange 65 that forms part of the first nut 40, and a mating, cylindrical surface 76 of an intermediate component 66, which is in sliding engagement with the outer surface 75 of the flange 65, thus forming the rotational bearing 60. The intermediate component 66 is slidably received within a pocket 52 of the connecting member 50, thus forming the sliding bearing 61 described above.

The second drive system 22 is operatively connected to the connecting member 50 in a similar manner to the first drive system 20, in that the second nut 42 is attached to the connecting member 50 via a second bearing arrangement that includes a rotational bearing 62 and a sliding bearing 63. The rotational bearing 62 and the sliding bearing 63 allow the connecting member 50 to move (e.g., towards or away from, and rotate) relative to the second nut 42.

The rotational bearing 62 comprises the outer, cylindrical surface 77 of a flange 67 that forms part of the second nut 42, and a mating, cylindrical surface 78 of an intermediate component 68, which is in sliding engagement with the outer surface 77 of the flange 67, thus forming the rotational bearing 62. The intermediate component 68 is slidably received within a pocket 54 of the connecting member 50, thus forming the sliding bearing 63 described above.

The connecting member 50 is connected to the output shaft 100 via a central rotational bearing 80, which may comprise the outer, cylindrical surface 101 of a flange 102 (that is connected to or forms part of the output shaft 100) and a mating, cylindrical surface 55 of the connecting member 50. The flange 102 may extend into an aperture 56 of the connecting member 50, and the mating, cylindrical surface 55 may be the inside surface of the aperture 56.

During normal operation the first and second drive systems 20, 22 will move in unison, such that the first and second nuts 40, 42 may remain at the same axial position along their respective screw shafts 30, 32. During such operation the rotational and sliding bearings described above may not need to be substantially utilised, since the connecting member 50 does not, for example, need to rotate relative to the first or second nut 40, 42.

Upon failure of one of the first or second drive systems 20, 22, the control system remains able to move the output shaft 100 due to the connection between the connecting member 50 and the first and second nuts 40, 42, which allows the connecting member 50 to move (e.g., towards or away from, and rotate) relative to the first or second nut 40, 42 even if one of them is stuck in position (e.g., jammed) due to the failure of its respective drive system.

In the case of failure of the first or second drive system, the first or second movable component will need to move a longer distance than it would during normal operation. This is because it is moving on its own and is, therefore, moving the output shaft by rotating the connecting member, as opposed to translating it with the other movable component. Accordingly, to comply with the stroke requirements upon failure of one of the drive systems, the actuator 10 may be sized to perform a stroke that is longer than that required during normal operation.

In accordance with the disclosure, therefore, the first and/or second bearing arrangements are configured to permit movement of the connecting member 50 by the first movable component 40 or the second movable component 42 upon failure of the second drive system 22 or the first drive system 20, respectively. For example, the movement of the connecting member 50 may be permitted if one of the first and second nuts are unable to move (as a result of the first or second drive system 20, 22 failing).

In the illustrated example, the arrangement of rotational and sliding bearings described above allows the connecting member 50 to move and actuate a component that it is connected to, even if one of the first and second drive systems 20, 22 fails.

For example, if the first nut 40 is stuck, then it will not be able to move axially. However, the second nut 42 will still be able to move axially and this will cause the connecting member 50 to move in the same direction. As the first nut 40 is fixed in position, the connecting member 50 will be restrained against some movement, but the first bearing arrangement (including rotational bearing 60 and sliding bearing 61) allows the connecting member 50 to rotate relative to the first nut 40, and also permits a small amount of sliding movement.

The central rotational bearing 80 allows the rotation of the connecting member 50 about the first nut 40 to cause an axial movement in the output shaft 100. This means that the connecting member 50 will still be movable so that the output shaft 100 can actuate a component to which it is attached.

It will be appreciated that the illustrated arrangement of Fig. 1 is merely an example of how the broadest aspects of the present disclosure may be carried out. In various embodiments, for example, the first and second drive systems 20, 22 may be hydraulic, such that the first and second nuts may be replaced by hydraulic pistons having respective bearing arrangements to allow movement of a connecting member upon failure of one of the hydraulic drive systems.

In the Fig. 1 embodiment, the first drive system 20 comprises two electric motors 202, 204, which are configured to rotate the first screw shaft 30 independently. Thus, upon failure of one of the electric motors 202, 204, the other of the electric motors 202, 204 may be able to rotate the first screw shaft 30.

Similarly, the second drive system 22 also comprises two electric motors 222, 224, which are configured to rotate the second screw shaft 32 independently. Thus, upon failure of one of the electric motors 222, 224, the other of the electric motors 222, 224 may be able to rotate the second screw shaft 32.

Each of the electric motors described above is connected to its respective screw shaft via a gear arrangement 215.

The control system may comprise one or more position sensors 218 configured to detect the position of the first nut 40 and the second nut 42 along the first screw shaft 30 and the second screw shaft 32, respectively.

Provision of four electric motors as shown and described in respect of Fig. 1 means that three electrical systems can fail (namely those powering three of the motors) and the actuator will still remain operational (with performance limitations). Thus, the actuator 10 of Fig. 1 is capable of continued operation even after multiple electrical faults and/or mechanical jams.

It should be appreciated that Fig. 1 is schematic and any relative dimensions cannot be inferred therefrom. For example, the pockets 52, 54 of the connecting member 50 may be sized such that the intermediate components 66, 68 cannot become disengaged during operation of the actuator 10, for example throughout the entire range of movement of the first and second movable components 40, 42.

Although the present invention has been described with reference to preferred embodiments, it will be understood by those skilled in the art that various changes in form and detail may be made without departing from the scope of the invention as set forth in the accompanying claims.

## Claims

1. An actuator (10) comprising an output shaft (100) and a control system configured to move the output shaft (100) for actuating a component, wherein the control system comprises:
a first drive system (20) comprising a first movable component (40), which is a first nut; and
a second drive system (22) comprising a second movable component (42), which is a second nut;
wherein the first component (40) and the second component (42) are connected to the output shaft (100), and each other, by a connecting member (50) that moves with the first component (40) and the second component (42) to move the output shaft (100) for actuating a component, and the control system further comprises:
one or more bearing arrangements (60-63) configured to permit movement of the connecting member (50) by the first movable component (40) or the second movable component (42) upon failure, disengagement, shutdown or other stoppage of the second drive system (22) or the first drive system (20), respectively;
**characterised in that**:
the first movable component (40) is translatable along a first screw shaft (30) of the first drive system (20), and the second movable component (42) is translatable along a second screw shaft (32) of the second drive system (22), wherein the first and second screw shafts (30,32) are located symmetrically on opposed sides of the output shaft (100);
the first and second drive systems (20,22) each comprise a pair of electric motors (202,204,222,224) and each pair is located symmetrically on opposed sides of the output shaft (100) and configured to rotate a respective screw shaft (30,32); and
each electric motor (202,204,222,224) is configured to rotate a respective screw shaft (30,32) independently via a gear arrangement (215) located at an axial end of the respective screw shaft (30,32).

2. An actuator as claimed in any preceding claim, wherein a first of said one or more bearing arrangements (60, 61) is associated with said first movable component (40), a second of said one or more bearing arrangements (62,63) is associated with said second movable component (42).

3. An actuator as claimed in claim 2, wherein said first bearing arrangement (60,61) permits rotational movement of said connecting member (50) with respect to said first movable component (40), as well as sliding movement of said connecting member (50) towards and away from said first movable component (40).

4. An actuator as claimed in claim 2 or 3, wherein said second bearing arrangement (62,63) permits rotational movement of said connecting member (50) with respect to said second movable component (42), as well as sliding movement of said connecting member (50) towards and away from said second movable component (42).

5. An actuator as claimed in any preceding claim, wherein said one or more bearing arrangements (60-63) each comprise a rotational bearing (60,62) to allow the connecting member (50) to rotate relative to the first movable component (40) and the second movable component (42).

6. An actuator as claimed in claim 5, wherein said rotational bearing (60,62) comprises an outer, cylindrical surface of a flange (65,67) connected to, or forming part of the first movable component (40) or the second movable component (42), wherein the outer, cylindrical surface is a bearing surface.

7. An actuator as claimed in any preceding claim, wherein said one or more bearing arrangements (60-63) each comprise a sliding bearing (61,63) to allow the connecting member (50) to slide towards or away from the first movable component (40) and the second movable component (42).

8. An actuator as claimed in claim 7, wherein said sliding bearing (61,63) comprises an intermediate component (66,68) that is slidably received within a pocket (52,54) of the connecting member (50).

9. An actuator as claimed in claims 6 and 8, wherein said outer, cylindrical surface of said flange (65,67) is in sliding engagement with a cylindrical surface of said intermediate component (66,68).

10. An actuator as claimed in any preceding claim, wherein said connecting member (50) is connected to said output shaft (100) via a central, rotational bearing (80).

11. An actuator as claimed in claim 10, wherein said central, rotational bearing (80) comprises an outer, cylindrical surface (101) of a flange (102) connected to or forming part of said output shaft (100), and a mating, cylindrical surface (55) of said connecting member (50).

12. An actuator as claimed in claim 11, wherein said flange (102) connected to or forming part of the output shaft (100) extends into an aperture (56) of said connecting member (50).

13. An actuator as claimed in claim 12, wherein said mating, cylindrical surface (55) of said connecting member (50) forms an inner surface of said aperture (56).

14. An actuator as claimed in any preceding claim, wherein said output shaft (100) is operatively connectable to a flight control surface of an aircraft.

15. A method of operating an actuator as claimed in any preceding claim, comprising:
driving said output shaft (100) in the event of a mechanical failure of one of said first movable component (40) and said second movable component (42) using the other of said first movable component (40) or said second movable component (42).

## Patentansprüche

1. Stellglied (10), umfassend eine Ausgangswelle (100) und ein Steuersystem, das konfiguriert ist, um die Ausgangswelle (100) zu bewegen, um eine Komponente zu betätigen, wobei das Steuersystem Folgendes umfasst:
ein erstes Antriebssystem (20), das eine erste bewegbare Komponente (40) umfasst, bei der es sich um eine erste Mutter handelt; und
ein zweites Antriebssystem (22), das eine zweite bewegbare Komponente (42) umfasst, bei der es sich um eine zweite Mutter handelt;
wobei die erste Komponente (40) und die zweite Komponente (42) durch ein Verbindungselement (50), das sich mit der ersten Komponente (40) und der zweiten Komponente (42) bewegt, um die Ausgangswelle (100) zu bewegen, um eine Komponente zu betätigen, mit der Ausgangswelle (100) und miteinander verbunden sind, und das Steuersystem ferner Folgendes umfasst:
eine oder mehrere Lageranordnungen (60-63), die konfiguriert sind, um Bewegung des Verbindungselements (50) durch die erste bewegbare Komponente (40) oder die zweite bewegbare Komponente (42) bei Versagen, Loslösung, Herunterfahren oder einem anderen Anhalten von jeweils dem zweiten Antriebssystem (22) oder dem ersten Antriebssystem (20) zuzulassen;
**dadurch gekennzeichnet, dass**:
die erste bewegbare Komponente (40) entlang einer ersten Schraubenwelle (30) des ersten Antriebssystems (20) verschiebbar ist und die zweite bewegbare Komponente (42) entlang einer zweiten Schraubenwelle (32) des zweiten Antriebssystems (22) verschiebbar ist, wobei sich die erste und zweite Schraubenwelle (30, 32) symmetrisch auf gegenüberliegenden Seiten der Ausgangswelle (100) befinden;
das erste und zweite Antriebssystem (20, 22) jeweils ein Paar an Elektromotoren (202, 204, 222, 224) umfasst und sich jedes Paar symmetrisch auf gegenüberliegenden Seiten der Ausgangswelle (100) befindet und konfiguriert ist, um eine jeweilige Schraubenwelle (30, 32) zu drehen; und
jeder Elektromotor (202, 204, 222, 224) konfiguriert ist, um eine jeweilige Schraubenwelle (30, 32) unabhängig über eine Getriebeanordnung (215) zu drehen, die sich an einem axialen Ende der jeweiligen Schraubenwelle (30, 32) befindet.

2. Stellglied nach einem vorhergehenden Anspruch, wobei eine erste der einen oder mehreren Lageranordnungen (60, 61) mit der ersten bewegbaren Komponente (40) verbunden ist und eine zweite der einen oder mehreren Lageranordnungen (62, 63) mit der zweiten bewegbaren Komponente (42) verbunden ist.

3. Stellglied nach Anspruch 2, wobei die erste Lageranordnung (60, 61) Drehbewegung des Verbindungselements (50) in Bezug auf die erste bewegbare Komponente (40) sowie Gleitbewegung des Verbindungselements (50) in Richtung und weg von der ersten bewegbaren Komponente (40) zulässt.

4. Stellglied nach Anspruch 2 oder 3, wobei die zweite Lageranordnung (62, 63) Drehbewegung des Verbindungselements (50) in Bezug auf die zweite bewegbare Komponente (42) sowie Gleitbewegung des Verbindungselements (50) in Richtung und weg von der zweiten bewegbaren Komponente (42) zulässt.

5. Stellglied nach einem vorhergehenden Anspruch, wobei die eine oder mehreren Lageranordnungen (60-63) jeweils ein Drehlager (60, 62) umfassen, um zuzulassen, dass sich das Verbindungselement (50) relativ zu der ersten bewegbaren Komponente (40) und der zweiten bewegbaren Komponente (42) dreht.

6. Stellglied nach Anspruch 5, wobei das Drehlager (60, 62) eine äußere, zylindrische Fläche eines Flansches (65, 67) umfasst, die mit der ersten bewegbaren Komponente (40) oder der zweiten bewegbaren Komponente (42) verbunden ist oder einen Teil davon bildet, wobei die äußere, zylindrische Fläche eine Lagerfläche ist.

7. Stellglied nach einem vorhergehenden Anspruch, wobei die eine oder mehreren Lageranordnungen (60-63) jeweils ein Gleitlager (61, 63) umfassen, um zuzulassen, dass das Verbindungselement (50) in Richtung oder weg von der ersten bewegbaren Komponente (40) und der zweiten bewegbaren Komponente (42) gleitet.

8. Stellglied nach Anspruch 7, wobei das Gleitlager (61, 63) eine Zwischenkomponente (66, 68) umfasst, die verschiebbar innerhalb einer Tasche (52, 54) des Verbindungselements (50) aufgenommen ist.

9. Stellglied nach Anspruch 6 und 8, wobei die äußere, zylindrische Fläche des Flansches (65, 67) in Gleiteingriff mit einer zylindrischen Fläche der Zwischenkomponente (66, 68) ist.

10. Stellglied nach einem vorhergehenden Anspruch, wobei das Verbindungselement (50) über ein zentrales Drehlager (80) mit der Ausgangswelle (100) verbunden ist.

11. Stellglied nach Anspruch 10, wobei das zentrale Drehlager (80) eine äußere, zylindrische Fläche (101) eines Flansches (102), die mit der Ausgangswelle (100) verbunden ist oder einen Teil davon bildet, und eine passende, zylindrische Fläche (55) des Verbindungselements (50) umfasst.

12. Stellglied nach Anspruch 11, wobei sich der Flansch (102), der mit der Ausgangswelle (100) verbunden ist oder einen Teil davon bildet, in eine Öffnung (56) des Verbindungselements (50) erstreckt.

13. Stellglied nach Anspruch 12, wobei die passende, zylindrische Fläche (55) des Verbindungselements (50) eine Innenfläche der Öffnung (56) bildet.

14. Stellglied nach einem vorhergehenden Anspruch, wobei die Ausgangswelle (100) mit einer Flugsteuerfläche eines Luftfahrzeugs wirkverbindbar ist.

15. Verfahren zum Betätigen eines Stellglieds nach einem vorhergehenden Anspruch, umfassend:
Antreiben der Ausgangswelle (100) im Falle eines mechanischen Versagens von einer von der ersten bewegbaren Komponente (40) und der zweiten bewegbaren Komponente (42) unter Verwendung der anderen von der ersten bewegbaren Komponente (40) oder der zweiten bewegbaren Komponente (42).

## Revendications

1. Actionneur (10) comprenant un arbre de sortie (100) et un système de commande configuré pour déplacer l'arbre de sortie (100) afin d'actionner un composant, dans lequel le système de commande comprend :
un premier système d'entraînement (20) comprenant un premier composant mobile (40), qui est un premier écrou ; et
un second système d'entraînement (22) comprenant un second composant mobile (42), qui est un second écrou ;
dans lequel le premier composant (40) et le second composant (42) sont reliés à l'arbre de sortie (100), et l'un à l'autre, par un élément de liaison (50) qui se déplace avec le premier composant (40) et le second composant (42) pour déplacer l'arbre de sortie (100) afin d'actionner un composant, et le système de commande comprend en outre :
un ou plusieurs agencements de palier (60-63) configurés pour permettre le déplacement de l'élément de liaison (50) par le premier composant mobile (40) ou le second composant mobile (42) en cas de défaillance, désengagement, coupure ou autre arrêt du second système d'entraînement (22) ou du premier système d'entraînement (20), respectivement ;
**caractérisé en ce que** :
le premier composant mobile (40) peut être translaté le long d'un premier arbre à vis (30) du premier système d'entraînement (20), et le second composant mobile (42) peut être translaté le long d'un second arbre à vis (32) du second système d'entraînement (22), dans lequel les premier et second arbres à vis (30, 32) sont situés de manière symétrique sur les côtés opposés de l'arbre de sortie (100) ;
les premier et second systèmes d'entraînement (20, 22) comprennent chacun une paire de moteurs électriques (202, 204, 222, 224) et chaque paire est située de manière symétrique sur les côtés opposés de l'arbre de sortie (100) et configurée pour faire tourner un arbre à vis respectif (30, 32) ; et
chaque moteur électrique (202, 204, 222, 224) est configuré pour faire tourner un arbre à vis respectif (30, 32) indépendamment via un agencement d'engrenage (215) situé à une extrémité axiale de l'arbre à vis (30, 32) respectif.

2. Actionneur selon une quelconque revendication précédente, dans lequel un premier desdits un ou plusieurs agencements de palier (60, 61) est associé audit premier composant mobile (40), un deuxième desdits un ou plusieurs agencements de paliers (62, 63) est associé audit second composant mobile (42).

3. Actionneur selon la revendication 2, dans lequel ledit premier agencement de palier (60, 61) permet un mouvement de rotation dudit élément de liaison (50) par rapport audit premier composant mobile (40), ainsi qu'un mouvement de coulissement dudit élément de liaison (50) se rapprochant et s'éloignant dudit premier composant mobile (40).

4. Actionneur selon la revendication 2 ou 3, dans lequel ledit second agencement de palier (62, 63) permet un mouvement de rotation dudit élément de liaison (50) par rapport audit second composant mobile (42), ainsi qu'un mouvement de coulissement dudit élément de liaison (50) se rapprochant et s'éloignant dudit second composant mobile (42).

5. Actionneur selon une quelconque revendication précédente, dans lequel lesdits un ou plusieurs agencements de palier (60 à 63) comprennent chacun un palier rotatif (60,62) pour permettre à l'élément de liaison (50) de tourner par rapport au premier composant mobile (40) et au second composant mobile (42).

6. Actionneur selon la revendication 5, dans lequel ledit palier rotatif (60, 62) comprend une surface cylindrique extérieure d'une bride (65, 67) reliée au premier composant mobile (40) ou au second composant mobile ou faisant partie de ceux-ci (42), dans lequel la surface cylindrique extérieure est une surface de palier.

7. Actionneur selon une quelconque revendication précédente, dans lequel lesdits un ou plusieurs agencements de palier (60 à 63) comprennent chacun un palier de coulissement (61, 63) pour permettre à l'élément de liaison (50) de coulisser en se rapprochant ou en s'éloignant du premier composant mobile (40) et du second composant mobile (42).

8. Actionneur selon la revendication 7, dans lequel ledit palier de coulissement (61, 63) comprend un composant intermédiaire (66, 68) qui est reçu de manière coulissante à l'intérieur d'une poche (52, 54) de l'élément de liaison (50).

9. Actionneur selon les revendications 6 et 8, dans lequel ladite surface cylindrique extérieure de ladite bride (65, 67) est en prise coulissante avec une surface cylindrique dudit composant intermédiaire (66, 68).

10. Actionneur selon une quelconque revendication précédente, dans lequel ledit élément de liaison (50) est relié audit arbre de sortie (100) par l'intermédiaire d'un palier rotatif central (80).

11. Actionneur selon la revendication 10, dans lequel ledit palier rotatif central (80) comprend une surface cylindrique extérieure (101) d'une bride (102) reliée audit arbre de sortie (100) ou faisant partie de celui-ci, et une surface cylindrique d'accouplement (55) dudit élément de liaison (50).

12. Actionneur selon la revendication 11, dans lequel ladite bride (102), reliée audit arbre de sortie (100) ou faisant partie de celui-ci, s'étend dans une ouverture (56) dudit élément de liaison (50).

13. Actionneur selon la revendication 12, dans lequel ladite surface cylindrique d'accouplement (55) dudit élément de liaison (50) forme une surface intérieure de ladite ouverture (56).

14. Actionneur selon une quelconque revendication précédente, dans lequel ledit arbre de sortie (100) peut être relié de manière opérationnelle à une gouverne d'un aéronef.

15. Procédé d'utilisation d'un actionneur selon une quelconque revendication précédente, comprenant :
l'entraînement dudit arbre de sortie (100) en cas de défaillance mécanique de l'un dudit premier composant mobile (40) et dudit second composant mobile (42) en utilisant l'autre dudit premier composant mobile (40) ou dudit second composant mobile (42).
